# EUROPEAN PATENT SPECIFICATION

(11) **EP 3 750 814 B1**
(45) Date of publication and mention of the grant of the patent: **03.07.2024**
(21) Application number: 20173084.3
(22) Date of filing: 06.05.2020
(51) Int. Cl.: B64D 33/02, F02C 7/042, F02C 7/057

(54) **SUPERSONIC AIR INLET WITH TWO ADJUSTABLE RAMPS**
ÜBERSCHALL-LUFTEINLASS MIT ZWEI EINSTELLBAREN RAMPEN
PRISE D'AIR SUPERSONIQUE À DEUX RAMPES RÉGLABLES

(43) Date of publication of application: 16.12.2020
(73) Proprietor: The Boeing Company, Arlington, VA 22202 (US)
(72) Inventor: Huynh, Thuy, Chicago, IL 60606-1596 (US)
(74) Representative: Witte, Weller & Partner Patentanwälte mbB

(56) References cited:
- EP-A1- 2 703 624
- EP-A1- 3 048 049
- CN-B- 105 523 189
- US-A- 5 116 251

## Description

### Field

Embodiments of the disclosure relate generally to supersonic inlets for aircraft jet engines and more particularly to a caret inlet having a variable geometry compression ramp and diffusion ramp for off-design flight conditions.

### Background

Engine inlets for supersonic aircraft have complex aerodynamic requirements based on Mach number and other flight conditions. Fixed inlet geometries typically have highest efficiency at one specific Mach number and flight condition. Operation at other speeds or flight conditions results in degradation of the aerodynamic performance or efficiency of the inlet. To allow flight at varying Mach number, mechanical systems to adjust the capture area and ramp geometry of the inlet may be employed to increase efficiency. An existing solution to a variable ramps and variable capture inlet is the F-15 Eagle produced by The Boeing Company. This inlet system is highly efficient and is recognized as an optimized inlet design. However, later-generation fighters require additional aerodynamic tailoring capability. In such aircraft a caret-type inlet system is employed. Examples of aircraft employing such inlets are the F-18E/F Super Hornet produced by The Boeing Company and the F-22 Raptor produced by Lockheed Martin. These inlets are fixed geometry inlets and were designed for optimized operation at a particular flight Mach number. Carets are typically designed for a specific aircraft to achieve maximum efficiency at a single predetermined Mach number. The ramps are typically rectangular in shape and designed to be either fixed or variable.

EP 2 703 624 A1 discloses an engine inlet for efficient operation at off-design Mach number comprising an initial compression ramp, a principal compression ramp extending aft from and rotatably attached to the initial compression ramp, wherein said principal compression ramp is rotatable from a low Mach position to a design Mach position and a diffuser ramp rotatable oppositely to the principal compression ramp.

### SUMMARY

Exemplary embodiments provide an engine inlet for efficient operation at both design Mach number and off-design Mach numbers with a variable geometry caret inlet having a principal compression ramp extending rotatably attached at a first hinge line. The principal compression ramp is rotatable from a low Mach position to a design Mach position. A diffuser ramp is engaged by the principal compression ramp at an interface and is rotatably mounted at a second hinge line. The diffuser ramp is rotatable oppositely to the principal compression ramp to maintain contact at the interface. A compression ramp filler is mounted interior to the principal compression ramp and engages the principal compression ramp with a compression scrub surface. A diffuser ramp filler is mounted interior to the diffuser ramp and engages the diffuser ramp with a diffuser scrub surface

The embodiments provide a method of operation of a variable geometry caret inlet. A compression ramp is rotated in a first direction about a first hinge line from a high design Mach position. A diffuser ramp is oppositely rotated about a second hinge line. Contact is maintained between an aft portion of the compression ramp and a forward portion of the diffuser ramp with an interface between the compression ramp and the diffuser ramp. A compression ramp filler is translated to extend into a compression gap between a compression ramp inboard edge and a mating edge induced by rotation of the compression ramp. A diffuser ramp filler is translated to extend into a diffuser gap between a diffuser ramp inboard edge and a second mating edge induced by rotation of the diffuser ramp.

### BRIEF DESCRIPTION OF THE DRAWINGS

The features, functions, and advantages that have been discussed can be achieved independently in various implementations of the present disclosure or may be combined in yet other implementations, further details of which can be seen with reference to the following description and drawings.
FIG. 1 is a pictorial representation of portions of an aircraft incorporating implementations of the variable geometry caret inlet as disclosed herein;
FIG. 2 is a pictorial representation of the variable geometry caret inlet;
FIG. 3A is a pictorial representation of the variable geometry caret inlet with details of the principal compression ramp and diffuser ramp;
FIG. 3B is a pictorial representation of the variable geometry caret inlet with the principal compression ramp and diffuser ramp removed to show details of the compression ramp filler and diffuser ramp filler;
FIG. 3C is a top view of the details of the variable geometry caret inlet;
FIG. 4A is a pictorial representation of the variable geometry caret inlet with details of the ramp actuation mechanism and filler actuation mechanism in the 0 degree low Mach position;
FIG. 4B is a top view of the variable geometry caret inlet with details of the ramp actuation mechanism and filler actuation mechanism in the 0 degree low Mach position;
FIG. 4C is a side view of the variable geometry caret inlet with details of the ramp actuation mechanism and filler actuation mechanism in the 0 degree low Mach position;
FIG. 5A is a pictorial representation of the variable geometry caret inlet with details of the ramp actuation mechanism and filler actuation mechanism in the 10 degree high design Mach position;
FIG. 5B is a top view of the variable geometry caret inlet with details of the ramp actuation mechanism and filler actuation mechanism in the 10 degree high design Mach position;
FIG. 5C is a side view of the variable geometry caret inlet with details of the ramp actuation mechanism and filler actuation mechanism in the 10 degree high design Mach position;
FIG. 6A is a detailed view of the ramp fillers and ramp interface at line 6A-6A in FIG. 4B;
FIG. 6B is an expanded detailed view of the ramp interface at portion 6B of FIG. 6A; and,
FIG. 7 is a flow chart for a method for operation of a variable geometry caret inlet employing the implementations disclosed.

### DETAILED DESCRIPTION

The system and methods described herein provide embodiments for a caret inlet using two carets, one caret has a fixed geometry, the second caret has a variable geometry, to maximize pressure recovery across the Mach envelope range by varying the compression ramp setting in the variable geometry caret to provide a maximum efficiency over a range of flight Mach number; a range from a low Mach number for takeoff and landing achieved with 0 degree compression position in the example implementation to a high design Mach position achieved with a 10 degree compression position in the example implementation.

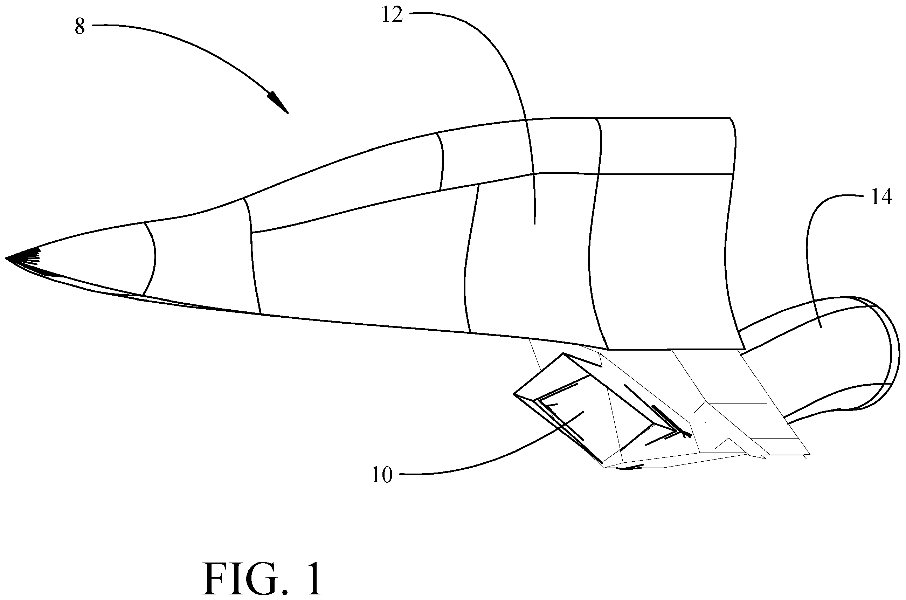

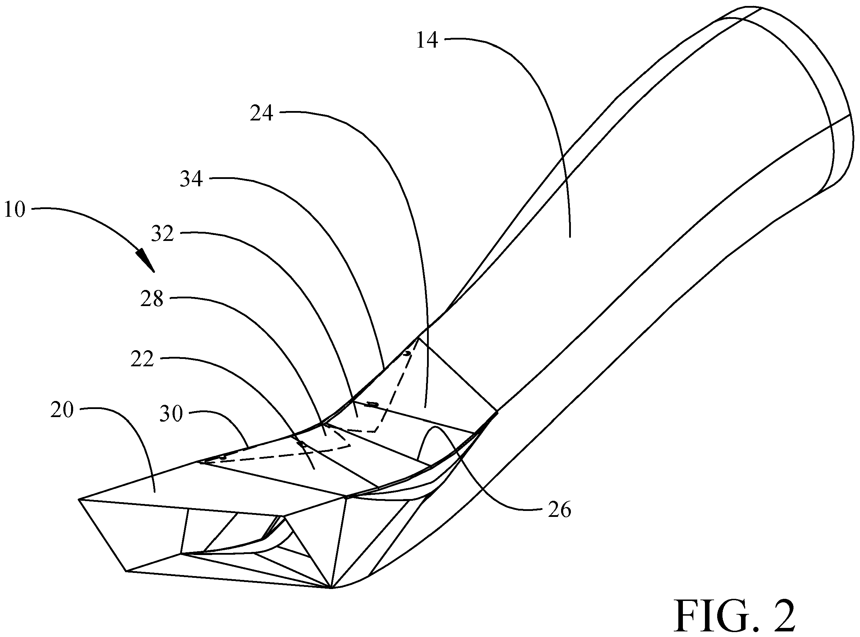

Referring to the drawings, FIG 1 shows representative portions of an exemplary aircraft 8 employing an implementation of a two-ramp caret inlet as disclosed herein. A caret inlet 10 is mounted adjacent a fuselage 12. A diffuser 14 extends from the caret inlet 10 to a jet engine (not shown). The elements of the two-ramp caret inlet 10, as seen in FIG. 2, include an inlet cowl 18 and an initial compression ramp 20. For the example implementation shown, the initial compression ramp 20 is fixed. A principal compression ramp 22 extends aft from the initial compression ramp 20 and engages a diffuser ramp 24 at an interface 26. A compression ramp filler 28 engages the principal compression ramp 22 at a compression ramp inboard edge 30 with a first scrubbing surface as will be described in greater detail subsequently. A diffuser ramp filler 32 engages the diffuser ramp 24 at a diffuser ramp inboard edge 34 with a second scrubbing surface as will be described in greater detail subsequently.

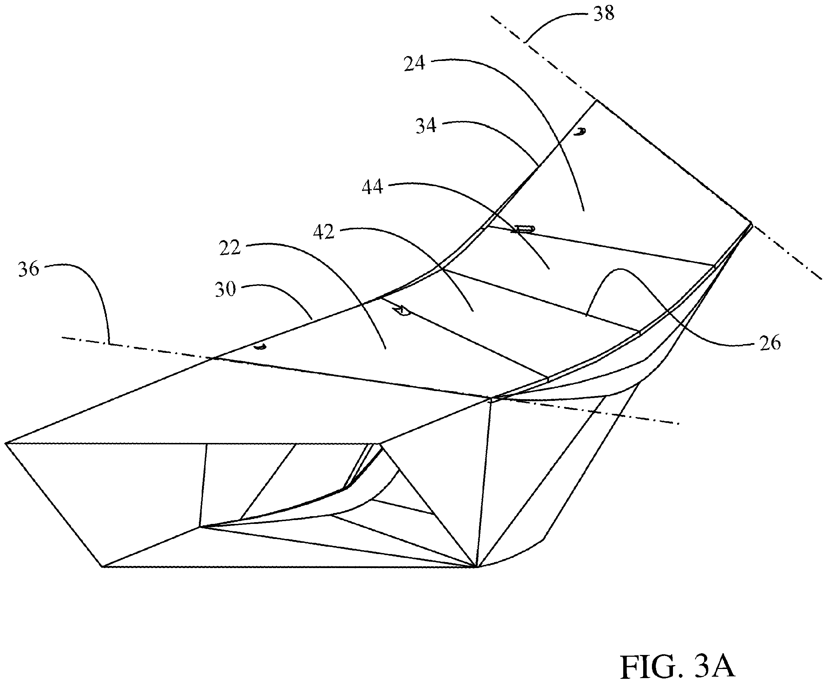

As seen in FIG. 3A, the principal compression ramp 22 is mounted to the initial compression ramp 20 for rotation about a first hinge line 36. The diffuser ramp 24 is mounted to the diffuser 14 for rotation about a second hinge line 38. Rotation of the principal compression ramp and the diffuser ramp about their respective hinge lines provides variable geometry for the caret inlet to tailor compression and expansion of incoming airflow over a range of Mach numbers. As will be described in greater detail subsequently, the example implementation of the caret inlet provides rotation of the principal compression ramp from a compression position for low Mach, 0 degrees for the example implementation shown in the drawings, to a compression position optimized for a high design point Mach, 10 degrees for the example implementation shown in the drawings, with commensurate opposite rotation of the diffuser ramp to maintain contact at the interface 26. The caret inlet approximates a two-dimensional (2D) inlet with a trapezoidal inlet aperture 40 and substantially flat sides. However, aerodynamic considerations require a curved interface between the principal compression ramp 22 and the diffuser ramp 24. As seen in FIG. 3A, the principal compression ramp 22 has a trailing portion 42 providing converging curvature approaching interface 26 and the diffuser ramp 24 has a leading portion 44 providing diverging curvature departing aft from the interface 26.

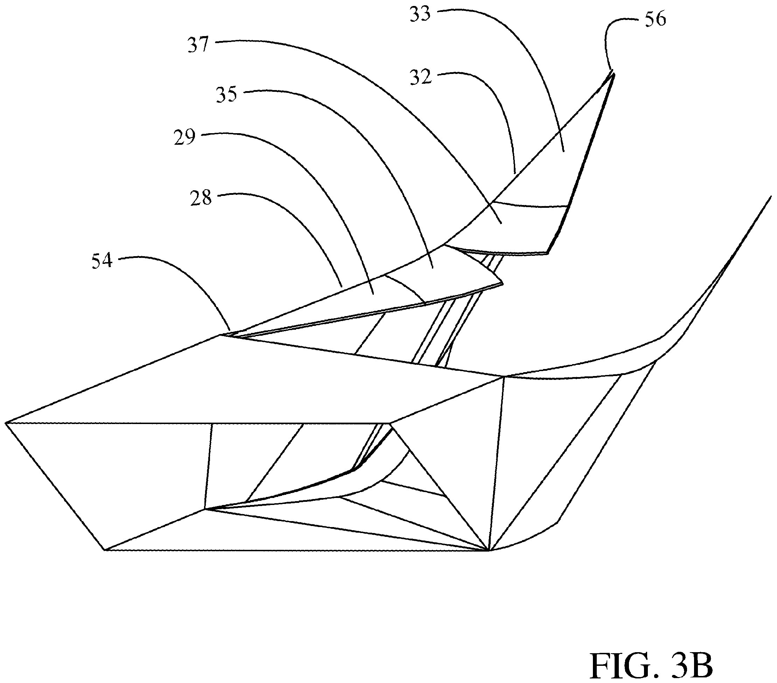

As seen in FIG. 3B with the principal compression ramp 22 and diffuser ramp 24 removed for clarity, compression ramp filler 28 and diffuser ramp filler 32 are mounted interior to the principal compression ramp 22 and diffuser ramp 24 in the inlet 10 and engage the principal compression ramp 22 and diffuser ramp 24 with compression scrub surface 29 and diffuser scrub surface 33 respectively. For complimentary engagement with the trailing portion 42 of the principal compression ramp 22 and the leading portion 44 of the diffuser ramp 24, compression ramp filler 28 has a curved mating trailing portion 35 and diffuser ramp filler 32 has a curved mating leading portion 37.

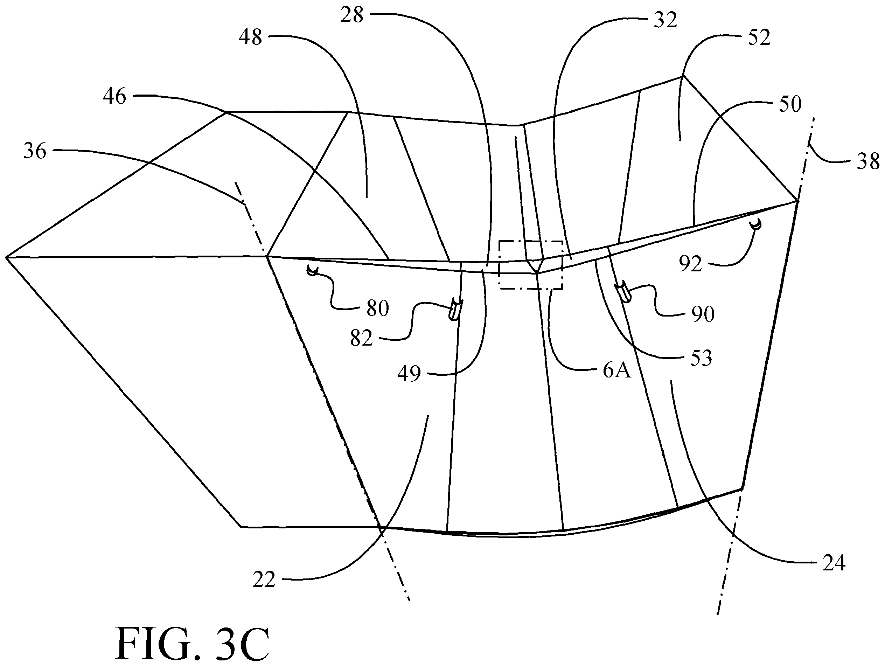

The principal compression ramp 22 and diffuser ramp 24 are trapezoidal in shape with linear profiles at the compression ramp inboard edge 30 and the diffuser ramp inboard edge 34. As seen in FIG. 3C, when the principal compression ramp 22 and the diffuser ramp 24 are rotated about the first hinge line 36 and second hinge line 38, respectively, to transition from the 10 degree position toward the 0 degree position, compression ramp inboard edge 30 separates from a first mating edge 46 on the adjacent compression surface 48 inducing a compression gap 49. Diffuser ramp inboard edge 34 separates from a second mating edge 50 on the adjacent diffuser surface 52 inducing a diffuser gap 53. Compression ramp filler 28, mounted interior to the principal compression ramp 22 in the inlet 10, translates relative to the principal compression ramp to maintain contact with the principal compression ramp with compression scrub surface 29 while closing the compression gap 49 created between the compression ramp inboard edge 30 and first mating edge 46. Similarly, diffuser ramp filler 32, mounted interior to the diffusion ramp in the inlet 10, translates relative to the diffuser ramp to maintain contact with the diffuser ramp with diffuser scrub surface 33 while closing the diffuser gap 53 created between the diffuser ramp inboard edge 34 and second mating edge 50. The implementation described herein for inboard edges and upper ramp surfaces of the compression ramp and diffuser ramp is equally applicable to an arrangement for separation of an outboard edge or lower ramp elements in alternative configurations of the caret inlet 10.

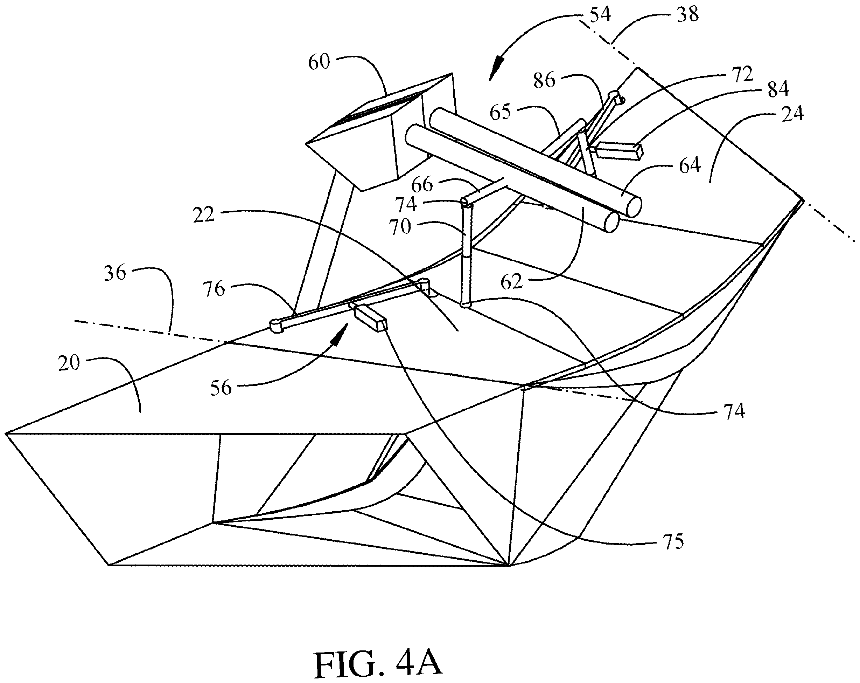

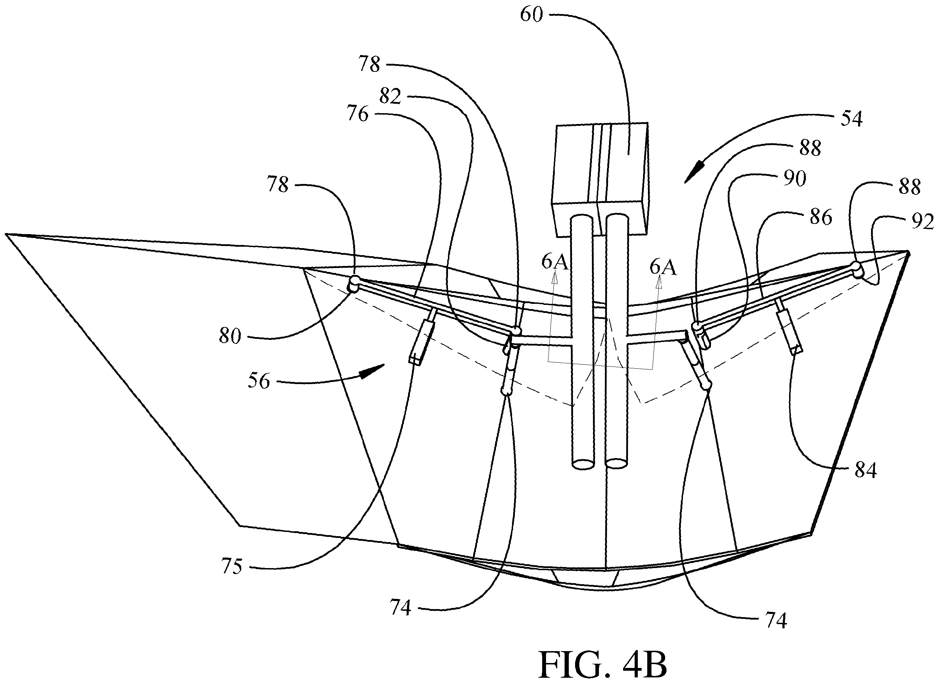

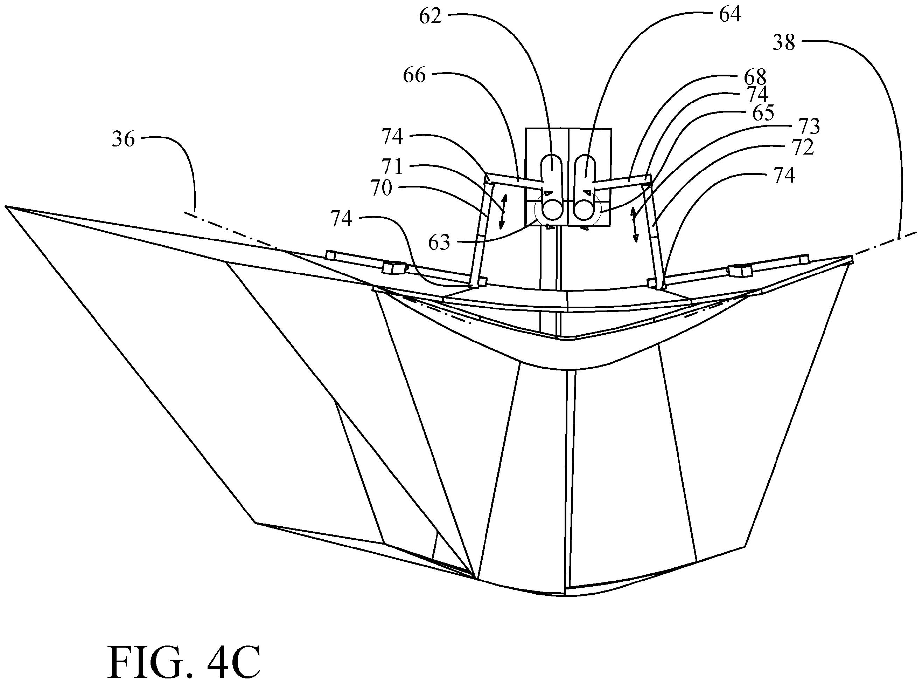

Operation of the variable geometry principal compression ramp 22 and diffuser ramp 24 is accomplished with an actuation mechanism 54 as shown in FIGs. 4A-4C. The actuation mechanism elements are shown in large scale for clarity. Drive motor 60 employing a planetary gear arrangement (not shown) rotates a first drive shaft 62 and a second drive shaft 64 in opposite rotational directions as indicated by arrows 63 and 65. Drive motor 60 in certain implementations may be two motors operating with opposite rotation. Rotation of the drive shafts 62, 64 rotates a first control arm 66 and a second control arm 68 which are engaged to elevate or depress a first push rod 70 and a second push rod 72, connected to the principal compression ramp 22 and diffuser ramp 24 respectively, as indicated by arrows 71 and 73. The configuration of the ramps in FIGs. 4A-4C is shown in the 0 degree position with the compression ramp inboard edge 30 and diffuser ramp inboard edge 34 separated from the first and second mating edges 46 and 50 with compression ramp filler 28 and diffuser ramp filler 32 extended into the resulting gap. This position is achieved with counterclockwise rotation of the first drive shaft 62 fully elevating the first push rod 70 urging the principal compression ramp 22 to rotate upward along first hinge line 36 and clockwise rotation of second drive shaft 64 fully elevating the second push rod 72 urging the diffuser ramp to rotate upward along second hinge line 38. Ball swivel joints 74 engaging the control arms to the push rods and the push rods to the ramps allows multi-axis pinned motion.

A compression ramp filler translation mechanism 56 employs a first linear actuator 75 operatively attached to a first cross bar 76 that is attached with guide pins 78 through a first forward guide slot 80 and a first aft guide slot 82 (best seen in FIG. 3C) to the compression ramp filler 28. A diffuser ramp filler translation mechanism 58 employs a second linear actuator 84 operatively attached to a second cross bar 86 that is attached with guide pins 88 through a second forward guide slot 90 and a second aft guide slot 92 to the diffuser ramp filler 32. Extension of the first and second linear actuators 75, 84 moves the first and second cross bars 76, 86 with the attached guide pins 78, 88 toward inboard terminations of the guide slots extending the compression ramp filler 28 and diffuser ramp filler 32. Different lengths of the forward and aft guide slots accommodates the varying gap width between the inboard edges and mating edges proximate and distal the hinge lines with a longer guide slot providing greater translation for larger gap width. The longer first aft guide slot 82 rotates the compression ramp filler for larger area coverage of the compression gap 49 proximate the interface 26. Similarly, the longer second forward guide slot 90 rotates the diffuser ramp filer for larger area coverage of the diffuser gap 53 proximate the interface. As seen in FIGs. 4A-4C, guide pins 78 are at the inboard terminations of the forward guide slot 80 and aft guide slot 82 and guide pins 88 are at the inboard terminations of forward guide slot 90 and aft guide slot 92 fully extending the compression ramp filler 28 and diffuser ramp filler 32 in the 0 degree low Mach position.

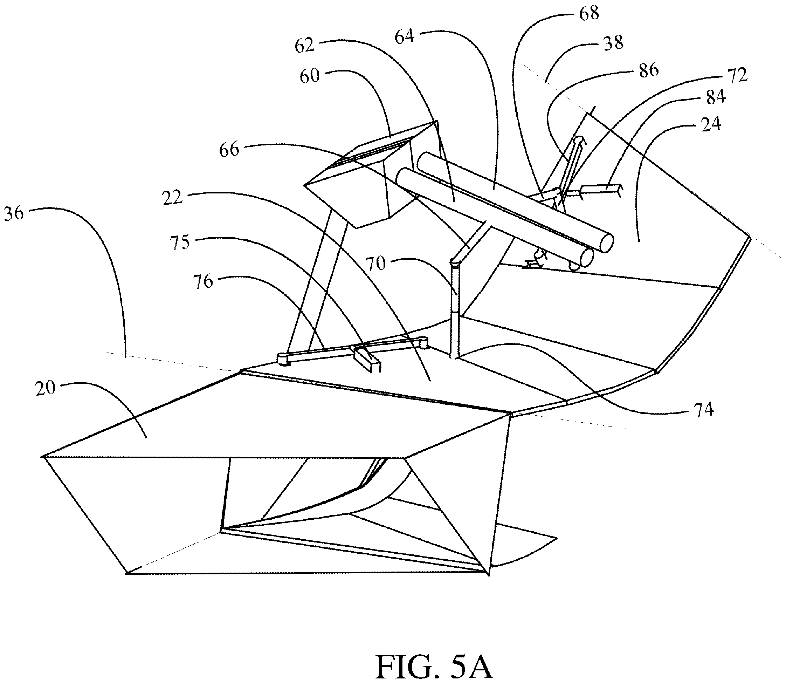

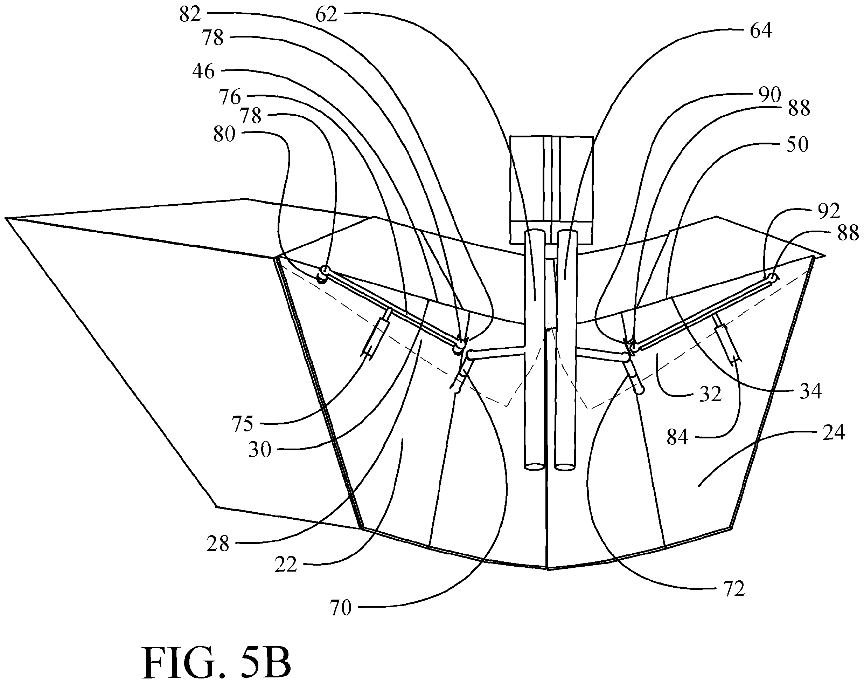

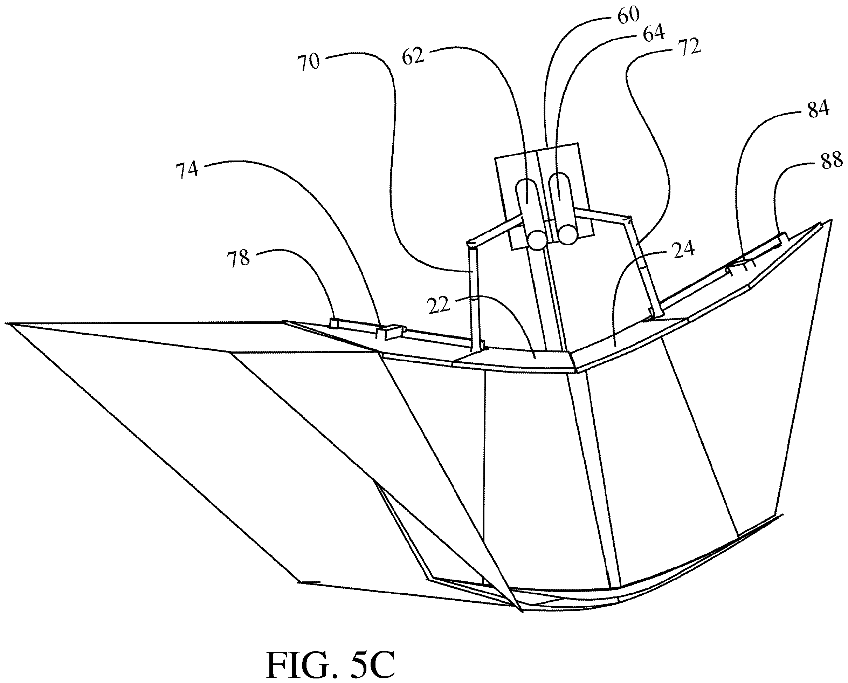

As seen in FIGs. 5A-5C with the ramps in the 10 degree high design point Mach position, clockwise rotation of the first drive shaft 62 depresses first push rod 70 urging the principal compression ramp 22 to rotate downward along first hinge line 36. Simultaneous counterclockwise rotation of the second drive shaft 64 depresses the second push rod 72 downward urging the diffuser ramp 24 to rotate downward along second hinge line 38. Concurrently, simultaneous retraction of the first linear actuator 75 and second linear actuator 84 moves the guide pins 78, 88 toward outboard terminations of the guide slots retracting the compression ramp filler 28 and diffuser ramp filler 32 with contact of the compression ramp inboard edge 30 and first mating edge 46 and the diffuser ramp inboard edge 34 and second mating edge 50.

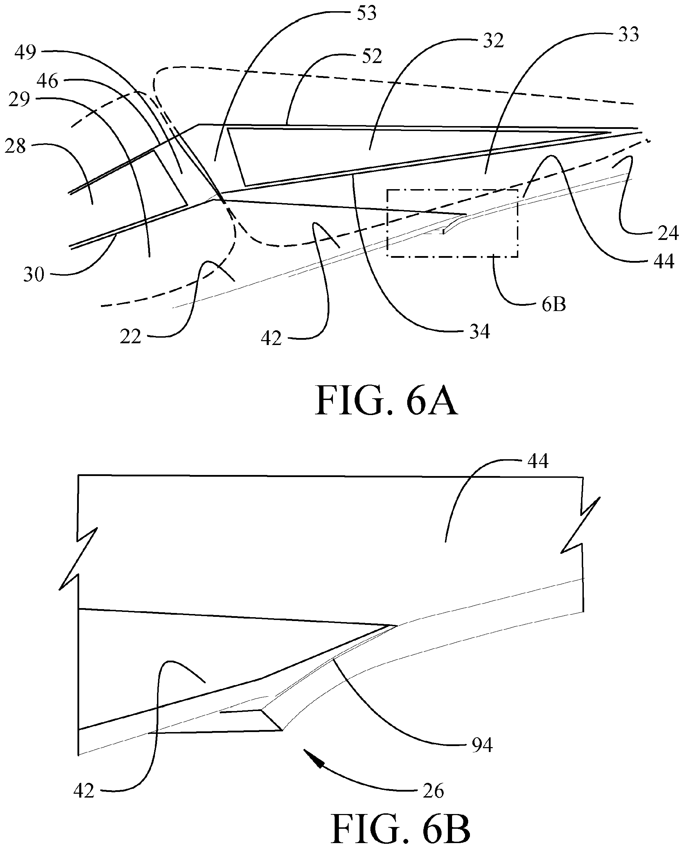

FIGs. 6A and 6B show the engagement of the trailing portion 42 of the principal compression ramp 22 and the leading portion 44 of the diffuser ramp 24 at the interface 26. Leading portion 44 provides an interface scrubbing surface 94 over which the trailing portion 42 rides, the interface scrubbing surface receiving the trailing portion to maintain sealing contact during relative motion of the principal compression ramp 22 and diffuser ramp 24 induced by rotation about the first and second hinge lines 36 and 38 as previously described.

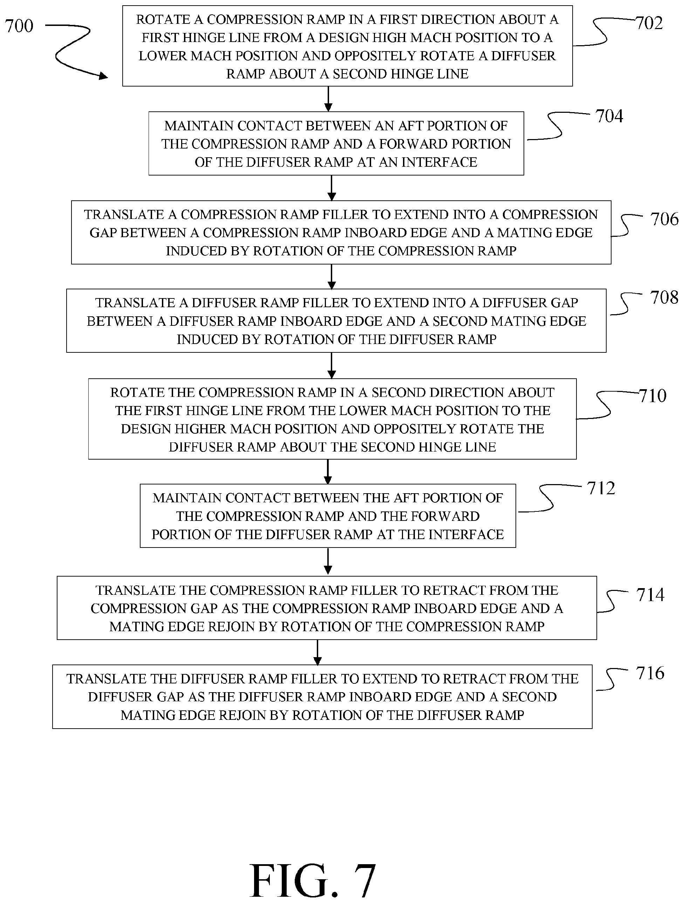

A method 700 of increasing inlet efficiency for a dual ramp caret inlet with a principal compression ramp and a diffuser ramp across a range of Mach numbers provided by the implementations disclosed is shown in FIG. 7. For transition from a high design point Mach to a lower Mach, the compression ramp 22 is rotated in a first direction about a first hinge line 36 from a high design Mach position and a diffuser ramp 24 is oppositely rotated about a second hinge line 38, step 702. An interface 26 between the compression ramp 22 and diffuser ramp 24 maintains contact between an aft portion of the compression ramp and a forward portion of the diffuser ramp, step 704. A compression ramp filler 28 is translated to extend into a compression gap between a compression ramp inboard edge and a mating edge induced by rotation of the compression ramp, step 706. A diffuser ramp filler 32 is translated to extend into a diffuser gap between a diffuser ramp inboard edge and a second mating edge induced by rotation of the diffuser ramp, step 708. To transition from the lower Mach position to the high design Mach, the compression ramp 22 is rotated in a second direction about the first hinge line 36 from the lower Mach position and the diffuser ramp 24 is oppositely rotated about a second hinge line 38, step 710. The interface 26 between the compression ramp 22 and diffuser ramp 24 maintains contact between an aft portion of the compression ramp and a forward portion of the diffuser ramp, step 712. The compression ramp filler 28 is translated to retract from the compression gap as the compression ramp inboard edge and the mating edge rejoin by rotation of the compression ramp, step 714. The diffuser ramp filler 32 is translated to retract from the diffuser gap as the diffuser ramp inboard edge and second mating edge rejoin by rotation of the diffuser ramp, step 716.

Those skilled in the art will recognise modifications to the specific embodiments disclosed herein. The scope of the invention is defined by the following claims.

## Claims

1. An engine inlet (10) for efficient operation at off-design Mach number comprising:
an initial compression ramp (20);
a principal compression ramp (22) extending aft from and rotatably attached to the initial compression ramp (20) at a first hinge line (36), said principal compression ramp (22) rotatable from a low Mach position to a design Mach position;
a diffuser ramp (24) engaged by the principal compression ramp (22) at an interface (26), said diffuser ramp (24) rotatably mounted at a second hinge line (38) to a diffuser (14), said diffuser ramp (24) rotatable oppositely to the principal compression ramp (22) to maintain contact at the interface; (26);
a compression ramp filler (28) mounted interior to the principal compression ramp (22) and engaging the principal compression ramp (22) with a compression scrub surface (29); and,
a diffuser ramp filler (32) mounted interior to the diffuser ramp (24) and engaging the diffuser ramp (24) with a diffuser scrub surface (33).

2. The engine inlet (10) as defined in claim 1 wherein the principal compression ramp (22) and diffuser ramp (24) are trapezoidal in shape with linear profiles at a compression ramp inboard edge (30) and a diffuser ramp inboard edge (34).

3. The engine inlet (10) as defined in any of claims 1 to 2 wherein upon rotation of the principal compression ramp (22) about the first hinge line (36) and the diffuser ramp (24) about the second hinge line (38) to transition from the low Mach position toward the design Mach position, the compression ramp inboard edge (30) separates from a first mating edge (46) on an adjacent compression surface (48) inducing a compression gap (49) and diffuser ramp inboard edge (34) separates from a second mating edge (50) on an adjacent diffuser surface (52) inducing a diffuser gap (53).

4. The engine inlet (10) as defined in any of claims 1 to 3 wherein the compression ramp filler (28) translates relative to the principal compression ramp, the compression ramp filler (22) maintaining contact with the principal compression ramp (22) with the compression scrub surface (29) while closing the compression gap (49).

5. The engine inlet (10) as defined in any of claims 1 to 4 wherein the diffuser ramp filler (32) translates relative to the diffuser ramp, the diffuser ramp filler (24) maintaining contact with the diffuser ramp (24) with the diffuser scrub surface (33) while closing the diffuser gap (53).

6. The engine inlet (10) as defined in any of claims 1 to 5 wherein the principal compression ramp (22) has a trailing portion (42) providing converging curvature approaching interface (26) and the diffuser ramp (24) has a leading portion (44) providing diverging curvature departing aft from the interface (26).

7. The engine inlet (10) as defined in any of claims 1 to 6 further comprising an actuation mechanism (54) having
a drive motor (60); and
a first drive shaft (62) and a second drive shaft (64) connected to the drive motor (60) for rotation in opposite rotational directions.

8. The engine inlet (10) as defined in any of claims 1 to 7 further comprising an actuation mechanism (54) having
a first control arm (66) extending from the first drive shaft (62) and engaged to elevate or depress a first push rod (70) connected to the principal compression ramp (22); and
a second control arm (68) extending from the second drive shaft and engaged to elevate or depress a second push rod (72) connected to the diffuser ramp (24).

9. The engine inlet (10) as defined in any of claims 1 to 8 further comprising a compression ramp filler translation mechanism (56) having
a first linear actuator (75) operatively attached to a first cross bar (76), said first cross bar (76) attached with guide pins (78) through a first forward guide slot (80) and a first aft guide slot (82) to the compression ramp filler (28) whereby extension of the first linear actuator moves the first cross bar with the attached guide pins toward inboard terminations of the first forward guide slot and first aft guide slot extending the compression ramp filler and retraction of the first linear actuator moves the first cross bar with the attached guide pins toward outboard terminations of the first forward guide slot and first aft guide slot retracting the compression ramp filler.

10. The engine inlet (10) as defined in claim 9 wherein the first forward guide slot (80) and first aft guide slot (82) have different lengths whereby varying gap width between the compression ramp inboard edge (30) and the first mating edge proximate and distal the hinge lines are accommodated with a longer guide slot providing greater translation for larger gap width.

11. The engine inlet (10) as defined in any of claims 1 to 10 further comprising a diffuser ramp filler translation mechanism (58) having
a second linear actuator (84) operatively attached to a second cross bar (86) attached with guide pins (88) through a second forward guide slot (90) and a second aft guide slot (92) to the diffuser ramp filler (32) whereby extension of the second linear actuator moves(84) the second cross bar (86) with the attached guide pins (88) toward inboard terminations of the guide slots extending the diffuser ramp filler (32) and retraction of the second linear actuator moves(84) the second cross bar (86) with the attached guide pins (88) toward outboard terminations of the second forward guide slot (90) and second aft guide slot (92) retracting the compression ramp filler (28).

12. The engine inlet (10) as defined in claim 11 wherein the second forward guide slot (90) and second aft guide slot (92) have different lengths whereby varying gap width between the diffuser ramp inboard edge (34) and the second mating edge proximate and distal the hinge lines is accommodated with a longer guide slot providing greater translation for larger gap width.

13. A method for operation of a variable geometry engine inlet (10), said method comprising:
rotating a compression ramp in a first direction about a first hinge line (36) from a design high Mach position;
oppositely rotating a diffuser ramp (24) about a second hinge line (38);
maintaining contact between an aft portion of the compression ramp and a forward portion of the diffuser ramp (24) with an interface (26) between the compression ramp (22) and diffuser ramp (24);
translating a compression ramp filler (28) to extend into a compression gap (49) between a compression ramp inboard edge (30) and a mating edge induced by rotation of the compression ramp; and,
translating a diffuser ramp filler (32) to extend into a diffuser gap (53) between a diffuser ramp inboard edge (34) and a second mating edge (50) induced by rotation of the diffuser ramp (24).

14. The method as defined in claim 13 further comprising:
rotating the compression ramp in a second direction about the first hinge line (36) from the lower Mach position;
oppositely rotating the diffuser ramp (24) about the second hinge line (38);
maintaining contact between the aft portion of the compression ramp and the forward portion of the diffuser ramp (24) with the interface (26);
translating the compression ramp filler (28) to retract from the compression gap (49) as the compression ramp inboard edge (30) and a mating edge rejoin by rotation of the compression ramp; and,
translating the diffuser ramp filler (32) to retract from the diffuser gap (53) as the diffuser ramp inboard edge (34) and second mating edge (50) rejoin by rotation of the diffuser ramp (24).

## Patentansprüche

1. Triebwerkseinlass (10) zum effizienten Betrieb bei einer Mach-Zahl außerhalb der Auslegung, mit:
einer Vorkompressionsrampe (20);
einer Hauptkompressionsrampe (22), die sich nach hinten von und rotierbar angebracht an der Vorkompressionsrampe (20) an einer ersten Schwenklinie (36) erstreckt, wobei die Hauptkompressionsrampe (22) rotierbar von einer Niedrig-Mach-Position zu einer Auslegungs-Mach-Position ist;
einer Diffusor-Rampe (24), die durch die Hauptkompressionsrampe (22) an einer Schnittstelle (26) eingegriffen ist, wobei die Diffusor-Rampe (24) rotierbar an einer zweiten Schwenklinie (38) zu einem Diffusor (14) angebracht ist, wobei die Diffusor-Rampe (24) entgegengesetzt zu der Hauptkompressionsrampe (22) rotierbar ist, um einen Kontakt an der Schnittstelle (26) zu erhalten;
einem Kompressionsrampenfüller (28), der innerhalb der Hauptkompressionsrampe (22) montiert ist und die Hauptkompressionsrampe (22) mit einer Kompressionsreibfläche (29) eingreift; und
einem Diffusor-Rampenfüller (32), der innerhalb der Diffusor-Rampe (24) montiert ist und die Diffusor-Rampe (24) mit einer Diffusorreibfläche (33) eingreift.

2. Triebwerkseinlass (10) nach Anspruch 1, wobei die Hauptkompressionsrampe (22) und die Diffusor-Rampe (24) trapezförmig in ihrer Form mit linearen Profilen an einer Kompressionsrampeninnenkante (30) an einer Diffusor-Rampeninnenkante (34) sind.

3. Triebwerkseinlass (10) nach einem der Ansprüche 1 bis 2, wobei beim Rotieren der Hauptkompressionsrampe (22) um die erste Schwenklinie (36) und der Diffusor-Rampe (24) um die zweite Schwenklinie (38), um von der Niedrig-Mach-Position in Richtung der Auslegungs-Mach-Position zu überführen, sich die Kompressionsrampeninnenkante (30) von einer ersten Passkante (46) auf einer benachbarten Kompressionsfläche (48) trennt und eine Kompressionslücke (49) auslöst, und die Diffusor-Rampeninnenkante (34) sich von einer zweiten Passkante (50) an einer benachbarten Diffusorfläche (52) trennt und eine Diffusorlücke (53) auslöst.

4. Triebwerkseinlass (10) nach einem der Ansprüche 1 bis 3, wobei der Kompressionsrampenfüller (28) sich relativ zu der Hauptkompressionsrampe bewegt, wobei der Kompressionsrampenfüller (22) Kontakt mit der Hauptkompressionsrampe (22) mit der Kompressionsreibfläche (39) aufrechthält, während er die Kompressionslücke (49) schließt.

5. Triebwerkseinlass (10) nach einem der Ansprüche 1 bis 4, wobei der Diffusor-Rampenfüller (32) sich relativ zu der Diffusor-Rampe bewegt, wobei der Diffusor-Rampenfüller (24) Kontakt mit der Diffusor-Rampe (24) mit der Diffusorreibfläche (33) aufrechthält, während er die Diffusorlücke (53) schließt.

6. Triebwerkseinlass (10) nach einem der Ansprüche 1 bis 5, wobei die Hauptkompressionsrampe (22) einen Hinterabschnitt (42) aufweist, der eine konvergierende Krümmung bereitstellt, die sich der Schnittstelle (26) annähert, und die Diffusor-Rampe (24) einen Vorderabschnitt (44) aufweist, der eine divergierende Krümmung bereitstellt, die sich von der Schnittstelle (26) entfernt.

7. Triebwerkseinlass (10) nach einem der Ansprüche 1 bis 6, des Weiteren mit einem Aktuierungsmechanismus (54), der aufweist
einen Antriebsmotor (60); und
eine erste Antriebswelle (62) und eine zweite Antriebswelle (64), die mit dem Antriebsmotor (60) zum Rotieren in entgegengesetzte Rotationsrichtungen verbunden sind.

8. Triebwerkseinlass (10) nach einem der Ansprüche 1 bis 7, des Weiteren mit einem Aktuierungsmechanismus (54), der aufweist
einen ersten Steuerarm (66), der sich von der ersten Antriebswelle (62) erstreckt und der sich in Eingriff befindet, um einen ersten Druckstab (70) anzuheben oder niederzudrücken, der mit der Hauptkompressionsrampe (22) verbunden ist; und
einem zweiten Steuerarm (68), der sich von der zweiten Antriebswelle erstreckt und in Eingriff befindet, um einen zweiten Druckstab (72) anzuheben oder niederzudrücken, der mit der Diffusor-Rampe (24) verbunden ist.

9. Triebwerkseinlass (10) nach einem der Ansprüche 1 bis 8, des Weiteren mit einem Kompressionsrampenfüllerbewegungsmechanismus (56), der aufweist
einen ersten Linearaktuator (75), der wirksam an einem ersten Querstab (76) angebracht ist, wobei der erste Querstab (76) mit Führungsstiften (78) durch einen ersten Vorderführungsschlitz (80) und einen ersten Hinterführungsschlitz (82) an dem Kompressionsrampenfüller (28) angebracht ist, wobei ein Ausstrecken des ersten Linearaktuators den ersten Querstab mit den angebrachten Führungsstiften in Richtung Innenenden des ersten vorderen Führungsschlitzes und des ersten hinteren Führungsschlitzes bewegt und den Kompressionsrampenfüller ausstreckt, beim Zurückziehen des ersten Linearaktuators den ersten Querstab mit den angebrachten Führungsstiften in Richtung von Außenenden des ersten vorderen Führungsschlitzes und des ersten hinteren Führungsschlitzes bewegt und den Kompressionsrampenfüller einzieht.

10. Triebwerkseinlass (10) nach Anspruch 9, wobei der erste vordere Führungsschlitz (80) und der erste hintere Führungsschlitz (82) verschiedene Längen aufweisen, wodurch eine sich ändernde Lückenbreite zwischen der Kompressionsrampeninnenkante (30) und der ersten Passkante proximal und distal zu den Schwenklinien mit einem längeren Führungsschlitz aufgefangen werden, der eine größere Bewegung für größere Lückenbreite bereitstellt.

11. Triebwerkseinlass (10) nach einem der Ansprüche 1 bis 10, des Weiteren mit einem Diffusor-Rampenfüllerbewegungsmechanismus (58), der aufweist
einen zweiten Linearaktuator (84), der wirksam an einem zweiten Querstab (86) angebracht ist, die mit Führungsstiften (88) durch einen zweiten vorderen Führungsschlitz (90) und einen zweiten hinteren Führungsschlitz (92) an dem Diffusor-Rampenfüller (32) angebracht ist, wodurch ein Ausstrecken des zweiten Linearaktuators (84) die zweite Querstab (86) mit den angebrachten Führungsstiften (88) in Richtung von Innenenden der Führungsschlitze bewegt und den Diffusor-Rampenfüller (32) ausstreckt, ein Zurückziehen des zweiten Linearaktuators (84) die zweite Querstab (86) mit angebrachten Führungsstiften (88) in Richtung von Außenenden des zweiten vorderen Führungsschlitzes (90) und des zweiten hinteren Führungsschlitzes (92) bewegt und den Kompressionsrampenfüller (28) zurückzieht.

12. Triebwerkseinlass (10) nach Anspruch 11, wobei der zweite vordere Führungsschlitz (90) und der zweite hintere Führungsschlitz (92) verschiedene Längen aufweisen, wodurch verschiedene Lückenbreiten zwischen der Diffusor-Rampeninnenkante (34) und der zweiten Passkante proximal und distal zu den Schwenklinien aufgefangen ist in einem längeren Führungsschlitz, der eine größere Bewegung für größere Lückenbreiten bereitstellt.

13. Verfahren zum Betreiben eines Triebwerkseinlasses (10) von variabler Geometrie, wobei das Verfahren aufweist:
Rotieren einer Kompressionsrampe in einer ersten Richtung um eine erste Schwenklinie (36) aus einer Auslegungs-Hoch-Mach-Position;
entgegengesetztes Rotieren einer Diffusor-Rampe um eine zweite Schwenklinie (38);
Aufrechterhalten eines Kontakts zwischen einem Hinterabschnitt der Kompressionsrampe und einem Vorderabschnitt der Diffusor-Rampe (24) mit einer Schnittstelle (26) zwischen der Kompressionsrampe (22) und der Diffusor-Rampe (24);
Bewegen eines Kompressionsrampenfüllers (28) zum Ausstrecken in eine Kompressionslücke (49) zwischen einer Kompressionsrampeninnenkante (30) und einer Passkante, durch Rotation der Kompressionsrampe ausgelöst ist; und
Bewegen eines Diffusor-Rampenfüllers (32) zum Ausstrecken in eine Diffusorlücke (53) zwischen einer Diffusor-Rampeninnenkante (34) und einer zweiten Passkante (50), die durch Rotation der Diffusor-Rampe (24) ausgelöst ist.

14. Verfahren nach Anspruch 13, des Weiteren mit:
Rotieren der Kompressionsrampe in einer zweiten Richtung um die erste Schwenklinie (36) von aus der Niedrig-Mach-Position;
entgegengesetztes Rotieren der Diffusor-Rampe (24) um die zweite Schwenklinie (38);
Aufrechterhalten eines Kontakts zwischen dem Hinterabschnitt der Kompressionsrampe und dem Vorderabschnitt der Diffusor-Rampe (24) mit der Schnittstelle (26);
Bewegen des Kompressionsrampenfüllers (28) dazu, sich von der Kompressionslücke (49) zurückzuziehen, wenn die Kompressionsrampeninnenkante (30) und eine Passkante durch Rotation der Kompressionsrampe wieder zusammenkommen; und
Bewegen des Diffusor-Rampenfüllers (32) zum Zurückziehen von der Diffusorlücke (53), wenn die Diffusor-Rampeninnenkante (34) und die zweite Passkante (50) durch Rotation der Diffusor-Rampe (24) wieder zusammenkommt.

## Revendications

1. Entrée d'air moteur (10) pour un fonctionnement efficace à un nombre de Mach hors conception, comprenant :
une rampe de compression initiale (20) ;
une rampe de compression principale (22) s'étendant vers l'arrière et attachée rotative à la rampe de compression initiale (20) au niveau d'une première ligne d'articulation (36), ladite rampe de compression principale (22) étant rotative depuis une position de Mach basse jusqu'à une position de Mach de conception ;
une rampe de diffuseur (24) au contact de laquelle vient la rampe de compression principale (22) au niveau d'une interface (26), ladite rampe de diffuseur (24) étant montée rotative sur un diffuseur (14) au niveau d'une deuxième ligne d'articulation (38), ladite rampe de diffuseur (24) étant rotative en sens opposé à celui de la rampe de compression principale (22) afin de maintenir le contact au niveau de l'interface (26) ;
un élément de comblement de rampe de compression (28) monté à l'intérieur de la rampe de compression principale (22) et mettant la rampe de compression principale (22) au contact d'une surface de raclage de compression (29) ; et,
un élément de comblement de diffuseur (32) monté à l'intérieur de la rampe de diffuseur (24) et mettant la rampe de diffuseur (24) au contact d'une surface de raclage de diffuseur (33).

2. Entrée d'air moteur (10) selon la revendication 1, dans laquelle la rampe de compression principale (22) et la rampe de diffuseur (24) sont pourvues d'une forme trapézoïdale à profils linéaires au niveau d'un bord intérieur de rampe de compression (30) et d'un bord intérieur de rampe de diffuseur (34).

3. Entrée d'air moteur (10) selon l'une quelconque des revendications 1 à 2, dans laquelle, lors de la rotation de la rampe de compression principale (22) autour de la première ligne d'articulation (36) et de la rampe de diffuseur (24) autour de la deuxième ligne d'articulation (38) pour passer de la position de Mach basse à la position de Mach de conception, le bord intérieur de rampe de compression (30) se sépare d'un premier bord d'accouplement (46) sur une surface de compression adjacente (48) en créant un espace de compression (49) et le bord intérieur de rampe de diffuseur (34) se sépare d'un deuxième bord d'accouplement (50) sur une surface de diffuseur adjacente (52) en créant un espace de diffuseur (53).

4. Entrée d'air moteur (10) selon l'une quelconque des revendication 1 à 3, dans laquelle l'élément de comblement de rampe de compression (28) effectue un mouvement de translation par rapport à la rampe de compression principale, l'élément de comblement de rampe de compression (22) maintenant le contact avec la rampe de compression principale (22) au moyen de la surface de raclage de compression (29) alors qu'il ferme l'espace de compression (49).

5. Entrée d'air moteur (10) selon l'une quelconque des revendications 1 à 4, dans laquelle l'élément de comblement de rampe de diffuseur (32) effectue un mouvement de translation par rapport à la rampe de diffuseur, l'élément de comblement de rampe de diffuseur (24) maintenant le contact avec la rampe de diffuseur (24) au moyen de la surface de raclage de diffuseur (33) alors qu'il ferme l'espace de diffuseur (53).

6. Entrée d'air moteur (10) selon l'une quelconque des revendications 1 à 5, dans laquelle la rampe de compression principale (22) est pourvue d'une partie de fuite (42) fournissant une courbure convergente à l'approche de l'interface (26), et la rampe de diffuseur (24) est pourvue d'une partie d'attaque (44) fournissant une courbure divergente à partir de l'arrière de l'interface (26).

7. Entrée d'air moteur (10) selon l'une quelconque des revendications 1 à 6, comprenant en outre un mécanisme d'actionnement (54) possédant
un moteur d'entraînement (60) ; et
un premier arbre d'entraînement (62) et un deuxième arbre d'entraînement (64) reliés au moteur d'entraînement (60) pour effectuer une rotation dans des sens de rotation opposés.

8. Entrée d'air moteur (10) selon l'une quelconque des revendications 1 à 7, comprenant en outre un mécanisme d'actionnement (54) possédant
un premier bras de commande (66) s'étendant depuis le premier arbre d'entraînement (62) et engagé pour lever ou abaisser une première biellette de poussée (70) reliée à la rampe de compression principale (22) ; et
un deuxième bras de commande (68) s'étendant depuis le deuxième arbre d'entraînement et engagé pour lever ou abaisser une deuxième biellette de poussée (72) reliée à la rampe de diffuseur (24).

9. Entrée d'air moteur (10) selon l'une quelconque des revendications 1 à 8, comprenant en outre un mécanisme de translation d'élément de comblement de rampe de compression (56) possédant
un premier actionneur linéaire (75) attaché fonctionnellement à une première traverse (76), ladite première traverse (76) étant attachée, au moyen de broches de guidage (78) traversant une première fente de guidage avant (80) et une première fente de guidage arrière (82), à l'élément de comblement de rampe de compression (28), moyennant quoi la sortie du premier actionneur linéaire déplace la première traverse avec les broches de guidage attachées vers des extrémités intérieures de la première fente de guidage avant et de la première fente de guidage arrière pour sortir l'élément de comblement de rampe de compression, et la rentrée du premier actionneur linéaire déplace la première traverse avec les broches de guidage attachées vers des extrémités extérieures de la première fente de guidage avant et de la première fente de guidage arrière pour rentrer l'élément de comblement de rampe de compression.

10. Entrée d'air moteur (10) selon la revendication 9, dans laquelle la première fente de guidage avant (80) et la première fente de guidage arrière (82) possèdent des longueurs différentes, offrant une largeur d'espace variable entre le bord intérieur de rampe de compression (30) et le premier bord d'accouplement à proximité et à distance des lignes d'articulation, une fente de guidage plus longue assurant une translation plus importante pour une largeur d'espace plus grande.

11. Entrée d'air moteur (10) selon l'une quelconque des revendications 1 à 10, comprenant en outre un mécanisme de translation d'élément de comblement de rampe de diffuseur (58) possédant
un deuxième actionneur linéaire (84) attaché fonctionnellement à une deuxième traverse (86) attachée, au moyen de broches de guidage (88) traversant une deuxième fente de guidage avant (90) et une deuxième fente de guidage arrière (92), à l'élément de comblement de rampe de diffuseur (32), moyennant quoi la sortie du deuxième actionneur linéaire déplace (84) la deuxième traverse (86) avec les broches de guidage (88) attachées vers des extrémités intérieures des fentes de guidage pour sortir l'élément de comblement de rampe de diffuseur (32), et la rentrée du deuxième actionneur linéaire déplace (84) la deuxième traverse (86) avec les broches de guidage (88) attachées vers des extrémités extérieures de la deuxième fente de guidage avant (90) et de la deuxième fente de guidage arrière (92) pour rentrer l'élément de comblement de rampe de compression (28).

12. Entrée d'air moteur (10) selon la revendication 11, dans laquelle la deuxième fente de guidage avant (90) et la deuxième fente de guidage arrière (92) possèdent des longueurs différentes, offrant une largeur d'espace variable entre le bord intérieur de rampe de diffuseur (34) et le deuxième bord d'accouplement à proximité et à distance des lignes d'articulation, une fente de guidage plus longue assurant une translation plus importante pour une largeur d'espace plus grande.

13. Procédé pour faire fonctionner une entrée d'air moteur à géométrie variable (10), ledit procédé comprenant :
la rotation d'une rampe de compression dans un premier sens autour d'une première ligne d'articulation (36) à partir d'une position de Mach haute de conception ;
la rotation dans le sens opposé d'une rampe de diffuseur (24) autour d'une deuxième ligne d'articulation (38) ;
le maintien du contact entre une partie arrière de la rampe de compression et une partie avant de la rampe de diffuseur (24) au moyen d'une interface (26) entre la rampe de compression (22) et la rampe de diffuseur (24) ;
la translation d'un élément de comblement de rampe de compression (28) pour qu'il rentre dans un espace de compression (49) entre un bord intérieur de rampe de compression (30) et un bord d'accouplement créé par la rotation de la rampe de compression ; et,
la translation d'un élément de comblement de rampe de diffuseur (53) pour qu'il rentre dans un espace de diffuseur (53) entre un bord intérieur de rampe de diffuseur (34) et un deuxième bord d'accouplement (50) créé par la rotation de la rampe de diffuseur (24).

14. Procédé selon la revendication 13, comprenant en outre :
la rotation de la rampe de compression dans un deuxième sens autour de la première ligne d'articulation (36) à partir de la position de Mach plus basse ;
la rotation dans le sens opposé de la rampe de diffuseur (24) autour de la deuxième ligne d'articulation (38) ;
le maintien du contact entre la partie arrière de la rampe de compression et la partie avant de la rampe de diffuseur (24) au moyen de l'interface (26) ;
la translation de l'élément de comblement de rampe de compression (28) pour qu'il sorte de l'espace de compression (49) à mesure que le bord intérieur de rampe de compression (30) et un bord d'accouplement se rejoignent du fait de la rotation de la rampe de compression ; et,
la translation de l'élément de comblement de rampe de diffuseur (53) pour qu'il sorte de l'espace de diffuseur (53) à mesure que le bord intérieur de rampe de diffuseur (34) et le deuxième bord d'accouplement (50) se rejoignent du fait de la rotation de la rampe de diffuseur (24).
